# FASCICULE DE BREVET EUROPEEN

(11) **EP 3 797 510 B1**
(45) Date de publication et mention de la délivrance du brevet: **24.04.2024**
(21) Numéro de dépôt: 19724838.8
(22) Date de dépôt: 21.05.2019
(51) Int. Cl.: H04N 23/50, H04N 23/698, G03B 17/56

(54) **SYSTEME D'OBSERVATION PANORAMIQUE POUR PLATE-FORME**
PANORAMABEOBACHTUNGSSYSTEM FÜR PLATTFORM
PANORAMIC OBSERVATION SYSTEM FOR PLATFORM

(30) Priorité: 22.05.2018 FR 1800495
(43) Date de publication de la demande: 31.03.2021
(73) Titulaire: THALES, 92400 Courbevoie (FR)
(72) Inventeur: THIBOUT, Paul, 28410 Abondant (FR); GOSSET, Philippe, 78114 Magny les Hameaux (FR)
(74) Mandataire: Lavoix
(86) Numéro de dépôt international: PCT/EP2019/063041
(87) Numéro de publication internationale: WO 2019/224170

(56) Documents cités:
- EP-A1- 2 704 415
- WO-A1-2014/001526
- GB-A- 2 374 222
- US-A1- 2016 124 296

## Description

La présente invention concerne un système d'observation panoramique pour plate-forme. L'invention se rapporte également à une plate-forme comprenant un tel système d'observation panoramique.

Dans le domaine de la protection de plate-forme et notamment de véhicule, pour certaines applications particulières, il est connu d'utiliser un système d'observation à courte distance avec un autre système d'observation à longue distance.

Pour cela, le système d'observation à courte distance comporte un équipement de vision hémisphérique installé sur une plate-forme. Un tel équipement fournit à un opérateur de la plate-forme des informations sur l'environnement extérieur à la plate-forme sur 360° de sorte que le système est parfois qualifié de système d'observation panoramique.

Parmi ces informations, le système d'observation panoramique fournit notamment des images en temps réel à 360° pour une élévation par exemple comprise entre 75° et - 15° dont chaque point est référencé avec précision. Dans certains cas, l'équipement est également propre à fournir des informations de détection de cible mobile (parfois désigné sous le sigle DCM), des informations de détection d'alerte laser (parfois désigné sous le sigle DAL) et des informations de détection de départ de missiles (parfois désigné sous le sigle DDM).

Pour tenter au mieux de couvrir l'ensemble de l'environnement de la plate-forme sans zone de masquage, plusieurs équipements de vision sont usuellement disposés sur le pourtour de la plate-forme. Les images provenant de chaque équipement sont ensuite fusionnées pour restituer une seule image à un opérateur.

Toutefois, une telle fusion est délicate à réaliser en temps réel et implique, par construction, des problèmes de parallaxe et des problèmes liés à la présence de zones aveugles qui génèrent des pertes d'information qui sont particulièrement gênantes lorsque les équipements fournissent des informations de détection de cible mobile, de détection d'alerte laser et de détection de départ de missiles, la menace n'étant alors pas détectée.

Il existe donc un besoin pour un système d'observation panoramique permettant une meilleure observation de l'environnement.

Pour cela, il est décrit dans la présente description un système d'observation panoramique pour plate-forme, le système d'observation comportant un support présentant plusieurs positions distinctes et un capteur présentant un système optique présentant un champ au moins hémisphérique, le capteur étant propre à capter des images d'une partie de l'environnement de la plate-forme, le capteur étant solidaire du support et une pupille présentant une surface pupillaire étant définie pour le capteur. Le système d'observation comporte aussi un calculateur adapté pour traiter les images que le capteur est propre à capter et un dispositif de maintien du capteur, le dispositif de maintien comportant des éléments de maintien positionnés dans le champ du système optique, les éléments de maintien étant configurés pour que, dans toutes les positions du capteur, la surface apparente des éléments de maintien sur la pupille du capteur soit strictement inférieure à la surface pupillaire, chaque élément de maintien comporte deux barres de maintien délimitant un espace intérieur au moins en partie transparent.

Suivant des modes de réalisation particuliers, le système d'observation panoramique comprend une ou plusieurs des caractéristiques suivantes, prise(s) isolément ou suivant toutes les combinaisons techniquement possibles :
- les éléments de maintien sont configurés pour que, dans toutes les positions du capteur, la surface apparente des éléments de maintien sur la pupille du capteur soit inférieure ou égale à 50% de la surface pupillaire.
- chaque élément de maintien comporte des raidisseurs reliant les deux barres de maintien.
- l'espace intérieur est une lame à faces parallèles.
- le dispositif de maintien comporte une structure mécanique reliant les éléments de maintien.
- les éléments de maintien sont propres à transporter de l'alimentation électrique et à transporter des données.
- le système comporte au moins un capteur additionnel, par exemple choisi dans le groupe comprenant un radar, un goniomètre, un capteur audio, et un lidar, ledit au moins un capteur additionnel présentant un champ au moins hémisphérique, le capteur additionnel étant propre à capter des données d'une partie de l'environnement de la plate-forme, une pupille présentant une surface pupillaire étant définie pour le capteur, le système comportant au moins un dispositif de maintien d'un capteur additionnel, le dispositif de maintien comportant des éléments de maintien positionnés dans le champ du capteur additionnel, les éléments de maintien étant configurés pour que, dans toutes les positions du capteur additionnel, la surface apparente des éléments de maintien sur la pupille du capteur additionnel soit strictement inférieure à la surface pupillaire, chaque dispositif de maintien étant agencé de manière à délimiter des logements superposés, les logements étant propres chacun à accueillir un capteur respectif.
- chaque dispositif de maintien comportant au moins une carte intégrée dans le dispositif de maintien, chaque carte intégrée étant une carte d'alimentation et une carte de traitement.

Il est aussi proposé une plate-forme, notamment une plate-forme mobile, comportant un système d'observation panoramique tel que précédemment décrit.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple de système d'observation panoramique comportant un dispositif de maintien comprenant des éléments de maintien ;
- figure 2, une vue de face d'un élément de maintien de la figure 1 ;
- figure 3, une vue de côté du positionnement relatif de l'élément de maintien de la figure 2 ;
- figure 4, une vue en section d'une partie de l'élément de maintien, la section étant selon un axe IV-IV indiqué sur la figure 2 ;
- figure 5, une vue schématique d'un autre exemple de système d'observation panoramique comportant un dispositif de maintien à plusieurs étages ;
- figure 6, une vue schématique en perspective d'un autre exemple de système d'observation panoramique à plusieurs senseurs ;
- figure 7, une vue schématique en perspective d'encore un autre exemple de système d'observation panoramique à plusieurs senseurs ;
- figure 8, une vue schématique d'un autre exemple de dispositif de maintien vu de côté ;
- figure 9, une vue schématique de côté d'un autre exemple de dispositif de maintien ;
- figure 10, une vue schématique en section d'une partie du dispositif de maintien de la figure 9, la section étant selon un axe X-X indiqué sur la figure 9 ;
- figure 11, une vue schématique de côté d'un autre exemple de dispositif de maintien,
- figure 12, une vue schématique en section d'une partie du dispositif de maintien de la figure 11, la section étant selon un axe XI-XI indiqué sur la figure 11,
- figure 13, une vue schématique similaire à la vue de la figure 12 pour un dispositif différent, et
- figure 14, une vue agrandie d'une partie de la figure 13.

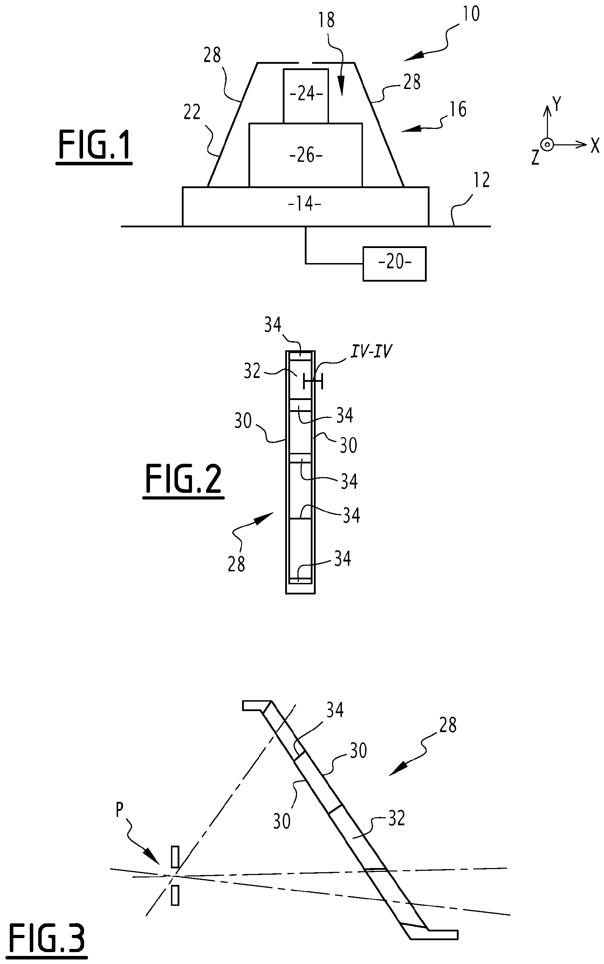

La figure 1 présente un système d'observation 10 panoramique pour plate-forme.

Par définition, un système d'observation est dit panoramique dès lors que le système d'observation est propre à fournir des informations sur l'environnement de la plate-forme à 360°.

La plate-forme est préférentiellement une plate-forme mobile.

La plate-forme est, par exemple, un véhicule terrestre ou naval, en particulier un véhicule de type militaire, tel un char d'assaut.

En variante, la plate-forme est un véhicule autonome.

Le système d'observation 10 est positionné sur une paroi 12 de la plate-forme dont une portion est visible sur la figure 1.

Par commodité, il est défini des directions.

Une direction normale à la paroi 12 sur laquelle est positionné le système d'observation 10 est symbolisé par l'axe Y sur la figure 1. Cette direction sera dénommée direction normale Y dans la description.

Il est également défini une première direction transversale située dans le plan de la figure 1, la première direction transversale étant perpendiculaire à la direction de normale Y. Cette direction est symbolisée par un axe X sur la figure 1 et sera dénommée première direction transversale X dans la suite de la description.

Il est également défini une deuxième direction transversale symbolisée par un axe Z sur la figure 1. La deuxième direction transversale Z est perpendiculaire à la direction normale Y et à la première direction transversale X.

Le système d'observation 10 comporte un support 14 et un dispositif de vision hémisphérique 16.

Le support 14 est rotatif autour de la direction normale Y. Des moteurs sont, par exemple, propres à entraîner un mouvement en rotation du support 14.

En variante, le support 14 est un support propre à effectuer une translation.

Dans chacun des cas, le support 14 présente plusieurs positions distinctes.

Le dispositif de vision hémisphérique 16 comporte des capteurs 18, un calculateur 20 et un dispositif de maintien 22.

Le capteur 18 est propre à capter des images d'une partie de l'environnement de la plate-forme.

Le capteur 18 est solidaire du support 14.

Le capteur 18 comporte un système optique 24 à champ hémisphérique et un détecteur 26.

Le système optique 24 présente un champ couvrant un domaine angulaire supérieur ou égal à un hémisphère dont l'axe est orienté vers le zénith.

Pour cette raison, le système optique 24 est qualifié de système optique 24 à « champ hémisphérique ». Par cette expression, il est entendu que le champ couvert par le système optique 24 est supérieur ou égal à un hémisphère. Le terme « champ supra hémisphérique » est parfois utilisé pour désigner cette notion.

Par exemple, le système optique 24 comporte un objectif fisheye, raccourci en fisheye (de l'anglais fish eye signifiant « oeil de poisson »). Le système optique 24 comporte alors un ou deux objectifs tels que décrits précédemment pour couvrir un champ de 360°.

Selon un autre exemple, le système optique 24 est un ensemble de trois objectifs fisheye, chaque objectif présentant un champ d'observation supérieur à 120°.

Dans chacun des cas précités, il est défini une surface pupillaire pour le capteur 18 correspondant à la surface de la pupille P du système optique 24.

Par définition, la pupille d'un système optique est la surface, limitée par le diaphragme d'ouverture, par laquelle un faisceau lumineux peut traverser le système optique.

Le détecteur 26 est une matrice de photodétecteurs permettant de définir des pixels.

Le détecteur 26 est situé dans le plan focal du système optique 24.

Le calculateur 20 est adapté à traiter les images que le capteur 18 est propre à capter pour obtenir des informations sur l'environnement de la plate-forme.

Dans l'exemple décrit, parmi les informations que le calculateur 20 est propre à obtenir, il y a les informations de détection de cible mobile, des informations de détection d'alerte laser et des informations de détection de départ de missiles.

Le calculateur 20 est dans le volume intérieur de la plate-forme délimitée par la paroi 12.

Selon un autre mode de réalisation, le calculateur 20 et le système optique 24 sont dans un même volume formant un module tournant.

Selon encore un autre mode de réalisation, le calculateur 20 et le support 14 sont confondus.

Le dispositif de maintien 22 est propre à maintenir mécaniquement le système optique 24.

Dans l'exemple de la figure 1, le dispositif de maintien 22 comporte deux éléments de maintien 28 positionnés dans le champ du capteur 18.

En variante, le dispositif de maintien 22 comporte un nombre différent d'éléments de maintien 28, typiquement trois ou quatre. D'autres nombres sont bien entendu envisageables selon l'application considérée.

Les éléments de maintien 28 sont configurés pour que, dans toutes les positions du capteur 18, la surface apparente des éléments de maintien 28 sur la pupille P soit strictement inférieure à la surface pupillaire. Dans l'exemple décrit, les positions du capteur 18 sont toutes les positions possibles pour le support 14.

La surface apparente correspond à la surface obtenue par projection des éléments de maintien 28 sur la pupille P.

Une telle condition implique que le vignettage de la pupille P est inférieur ou égal à la surface de la pupille P. Pour garantir une bonne qualité d'image, la condition sur le vignettage est à respecter.

Selon un mode de réalisation, dans toutes les positions du capteur 18, la surface apparente des éléments de maintien 28 sur la pupille P est inférieure ou égale à 80% de la surface pupillaire. Une telle valeur est compatible avec une reconstruction informatique des informations par un outil informatique.

De préférence, dans toutes les positions du capteur 18, la surface apparente des éléments de maintien 28 sur la pupille P est inférieure ou égale à 50% de la surface pupillaire.

Avantageusement, dans toutes les positions du capteur 18, la surface apparente des éléments de maintien 28 sur la pupille P est égale à 30% de la surface pupillaire.

Chacune de ces valeurs de pourcentage est choisie afin de garantir l'obtention d'un signal transmis et de pouvoir traiter ce signal transmis.

Selon l'exemple de la figure 1, le dispositif de maintien 22 est un ensemble d'éléments de maintien 28.

Un élément de maintien 28 est représenté sur les figures 2 à 4.

Chaque élément de maintien 28 s'étend dans un plan incliné par rapport à la direction normale Y.

Dans chacune des figures 2 à 4, chaque élément de maintien 28 comporte deux barres de maintien 30 délimitant un espace intérieur 32.

Chaque barre de maintien 30 est une barre longitudinale.

Chaque barre de maintien 30 est réalisée en un matériau métallique, par exemple du titane en technologie additive.

En variante, chaque barre de maintien 30 est réalisée en un matériau qui n'est pas métallique.

En l'occurrence, chaque élément de maintien 28 est évidé de sorte que l'espace intérieur 32 est de l'air.

En variante, l'espace intérieur 32 est rempli d'un matériau transparent pour la bande spectrale du capteur 18 utilisé

Chaque élément de maintien 28 de la figure 2 comporte également des raidisseurs 34.

Dans l'exemple particulier de la figure 2, les raidisseurs 34 sont des renforts transverses s'étendant principalement dans une direction parallèle à la première direction transversale X.

Les raidisseurs 34 sont au nombre de cinq mais d'autres nombres de raidisseurs sont envisageables.

En outre, comme visible sur la figure 3, dans le cas illustré, le faisceau optique est perpendiculaire aux barres de maintien 30.

Chaque élément de maintien 28 est ainsi propre à obturer moins de 30% de la surface pupillaire.

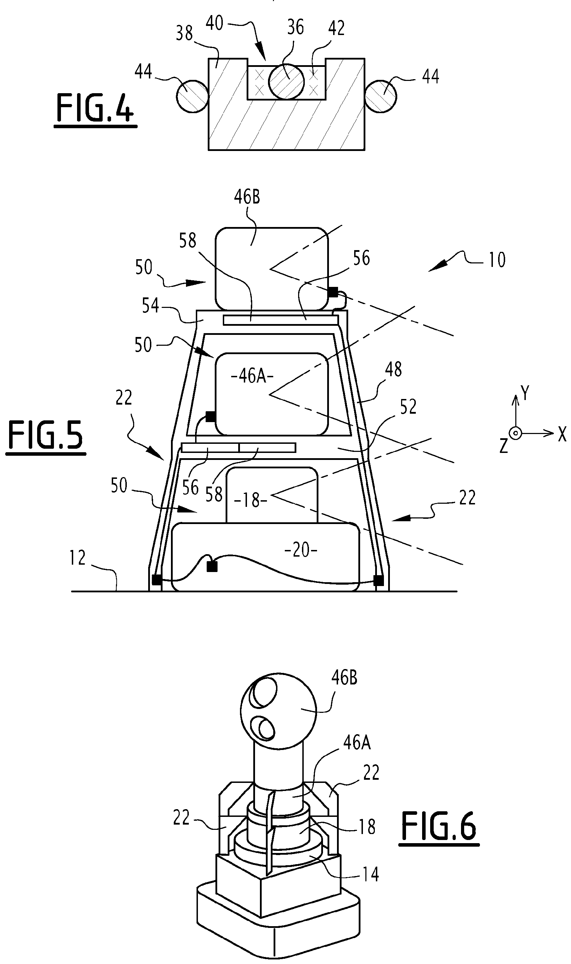

Comme illustré par la figure 4, une barre de maintien 30 comporte un câble 36, le câble 36 étant un câble électrique propre à transporter une alimentation électrique.

Par exemple, la barre de maintien 30 comporte une partie métallique 38 ayant une section transversale en forme de C et une partie de passage 40 de câble 36 électrique comportant le câble 36 et un adhésif 42.

En variante, le câble 36 est agencé à côté de la barre de maintien 30, le câble 36 étant alors un fil relativement fin.

Dans le mode de réalisation illustré, la barre de maintien 30 est propre à transmettre des données. Pour cela, par exemple, la barre de maintien 30 est pourvue de deux fibres optiques 44, une fibre optique 44 de chaque côté de la barre de maintien 30.

En variante, du fait de sa nature métallique, la barre de maintien 30 est propre à transmettre des données par conduction selon la technique des courants porteurs.

Selon un autre exemple, la barre de maintien 30 est pourvue d'une seule fibre optique 44 par laquelle transitent les données.

Le fonctionnement du système d'observation 10 va maintenant être décrit.

Le support 14 est tourné autour de la direction normale Y de manière à faire tourner le système optique 24 pour observer l'environnement sur 360°.

Grâce au capteur 18, le calculateur 20 est ainsi propre à fournir des images en temps réel en particulier à 360° avec une élévation par exemple comprise entre 75° et - 15° (ou plus en site haut et moins en site bas) dont chaque point est référencé avec précision. Des intervalles angulaires plus faibles ou plus grands en élévation peuvent également être considérés.

Le calculateur 20 est également propre à fournir des informations de détection de cible mobile, des informations de détection d'alerte laser et des informations de départ de missiles.

Par ailleurs, comme la pupille P du système optique 24 n'est jamais totalement obturée dans toutes les positions du capteur 18, le calculateur 20 est capable de corriger le vignettage fixe dans le temps généré par les éléments de maintien 28 sans engendrer de bruit trop important dans l'image.

L'emploi d'un dispositif de maintien 22 spécifique donne ainsi la possibilité à un dispositif de vision hémisphérique 16 d'observer sans masquage l'environnement de la plate-forme.

Le système d'observation 10 panoramique permet donc une meilleure observation de l'environnement.

Le dispositif de maintien 22 est également utilisable dans le cas d'un système d'observation 10 panoramique comportant une pluralité de capteurs, un capteur étant le capteur 18 d'images et le ou les autres capteurs étant un ou des capteurs additionnels 46.

Chaque capteur additionnel 46 présente un champ au moins hémisphérique, le capteur additionnel 46 étant propre à capter des données d'une partie de l'environnement de la plate-forme, une pupille P présentant une surface pupillaire étant définie pour le capteur additionnel 46.

Selon la figure 5, le système d'observation 10 comporte un premier capteur additionnel 46A et un deuxième capteur additionnel 46B.

Dans un tel cas illustré schématiquement par la figure 5, le système d'observation 10 panoramique est pourvu de dispositifs de maintien 22 formant une structure mécanique 48 délimitant des logements 50 superposés selon la direction normale Y, chaque logement 50 accueillant un des capteurs respectifs.

Selon un mode de réalisation, chaque dispositif de maintien 22 est adapté à la pupille P du capteur à laquelle est associé le dispositif de maintien 22. Chaque dispositif de maintien 22 comporte ainsi des éléments de maintien 28 positionnés dans le champ du capteur considéré, les éléments de maintien 28 étant configurés pour que, dans toutes les positions du capteur considéré, la surface apparente des éléments de maintien 28 sur la pupille P est strictement inférieure à la surface pupillaire.

Plus précisément, dans le cas représenté, en parcourant le système d'observation 10 depuis le logement 50 le plus proche de la paroi 12 vers le logement 50 le plus loin de la paroi 12, le premier logement 50 accueille le calculateur 20 et le capteur 18 d'images, le deuxième logement 50 accueille le premier capteur additionnel 46A et le troisième logement 50 accueille le deuxième capteur additionnel 46B.

Chaque logement 50 est délimité par des éléments de maintien 28. Le premier logement 50 est délimité latéralement par des éléments de maintien 28 similaires à ceux de la figure 2 et un autre élément de maintien 28 qui est une première plaque de support 52 reliant les éléments de maintien latéraux. La première plaque de support 52 est perpendiculaire à la deuxième direction transversale Z.

Le deuxième logement 50 est délimité par les éléments de maintien 28 suivants : des éléments de maintien 28 similaires à ceux de la figure 2, la première plaque de support 52 et une deuxième plaque de support 54. Les éléments de maintien latéraux sont reliés à une extrémité par la première plaque de support 52 et à l'autre extrémité par la deuxième plaque de support 54.

La deuxième plaque de support 54 sert de support au deuxième capteur additionnel 46B.

Un exemple de tel agencement est montré sur l'exemple de la figure 6, dans lequel le premier logement 50 accueille le capteur 18, le premier capteur additionnel 46A est un radar et le deuxième capteur additionnel 46B est une boule optronique.

Pour le dispositif de maintien 22 correspondant au deuxième logement 50 accueillant le radar, chaque barre de maintien 30 est en un matériau non conducteur. Cela permet d'éviter de perturber le fonctionnement du radar.

La structure mécanique 48 comporte, pour chaque capteur additionnel 46A et 46B, un convertisseur de données 56 pour permettre une transmission par fibre optique 44. Chaque convertisseur de données 56 est inséré dans une des plaques de support 52 ou 54.

En outre, la structure mécanique 48 comporte des cartes d'alimentation 58 intégrées dans la structure mécanique 48 (ici dans une plaque de support 52 ou 54 respective) ainsi que les câbles 36.

Les cartes d'alimentation 58 sont, par exemple, propres à convertir le format de transfert des données et des vidéos et en particulier filtrer des signaux.

Dans le mode de réalisation de la figure 5, le calculateur 20 est propre à fusionner les données provenant de plusieurs capteurs 18 et 46 distincts.

Le système d'observation 10 permet d'observer l'environnement sur 360°.

Le système d'observation 10 est capable de fonctionner de jour comme de nuit.

En outre, le système d'observation 10 proposé permet de disposer de plusieurs types d'informations selon les capteurs 18 et 46 dont le système d'observation 10 est équipé. Notamment, le système d'observation 10 permet de collecter des informations colorimétriques, géométriques ou auditives.

Le système d'observation 10 est un système ayant une perception de l'environnement proche de la perception humaine, ce qui est notamment utile pour des applications de surveillance et/ou de mobilité.

Autrement formulé, le système d'observation 10 est propre à traiter un ensemble de données pour identifier, prévenir, diriger et localiser dans l'environnement proche et dans toutes conditions atmosphériques.

Le système d'observation 10 permet aussi d'éviter les problèmes de parallaxe du fait que les logements 50 sont superposés selon la deuxième direction transversale Z.

De plus, un tel système d'observation 10 et en particulier la structure est compatible avec tout type de senseur, et notamment des senseurs déjà existants.

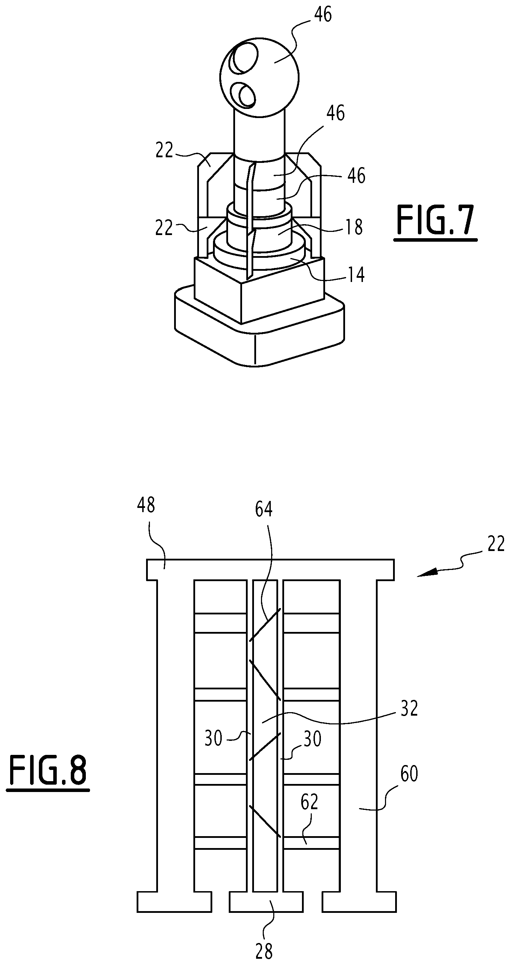

Pour montrer une telle adaptabilité, il est présenté à la figure 7, un système d'observation 10 similaire avec une structure à trois logements 50 et à quatre capteurs, c'est-à-dire un capteur 18 d'images et trois capteurs additionnels 46.

Les capteurs additionnels 46 sont choisis dans le groupe comprenant un radar, un goniomètre, un capteur audio et un lidar.

La cohabitation de capteurs de différents types peut impliquer des dispositifs de maintien 22 présentant une meilleure rigidité.

Pour cela, d'autres types de dispositif de maintien 22 sont envisageables comme illustré aux figures 8 à 12.

Le dispositif de maintien 22 de la figure 8 est maintenant décrit par différence avec le dispositif de maintien 22 de la figure 1.

Dans ce cas, le dispositif de maintien 22 comporte une structure mécanique 48 reliant chaque barre de maintien 30 et comportant des piliers 60.

Les piliers 60 sont reliés aux barres de maintien 30 par des traverses latérales 62.

Par ailleurs, dans l'espace intérieur 32, les fils de renforcement 64 sont positionnés en croisillon ou en triangle. En l'espèce, les fils de renforcement 64 sont des fils fins et métalliques.

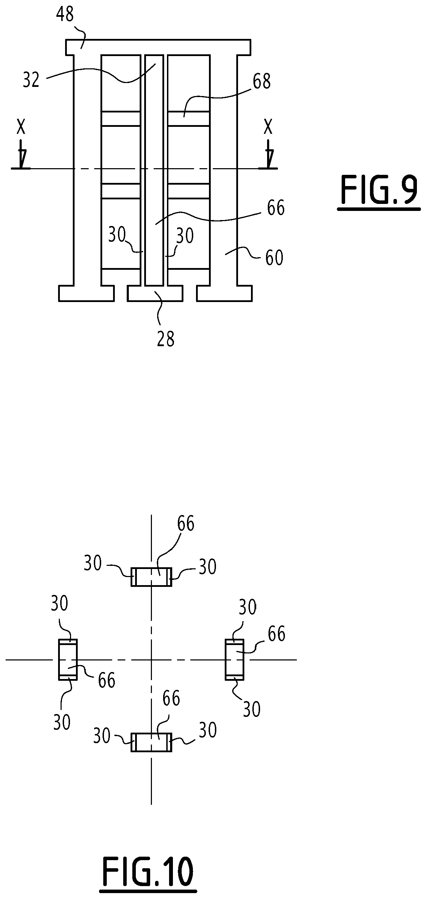

Selon un autre exemple illustré par les figures 9 et 10, le dispositif de maintien 22 comporte la structure de maintien 48 de la figure 8 et chaque élément de maintien 28 comporte les barres de maintien 30 de la figure 1 et une lame de verre 66 reliant les barres de maintien 30.

En variante, la lame de verre 66 est une lame réalisée en un autre matériau transparent pour le senseur considéré.

L'espace intérieur 32 est ainsi formé par la lame de verre 66.

Par exemple, l'espace intérieur 32 est une lame à faces parallèles.

Selon un autre exemple, l'espace intérieur 32 est une lame à faces concentriques à la pupille P du capteur 18.

Il est à noter que, pour un espace intérieur 32 formé par une lame de verre 66, l'espace intérieur 32 est utilisable pour transmettre des signaux optiques. La transmission des signaux optiques ne perturbe pas le fonctionnement du capteur 18.

En outre, comme visible sur la figure 10, la structure de maintien comporte quatre éléments de maintien équirépartis à 360°.

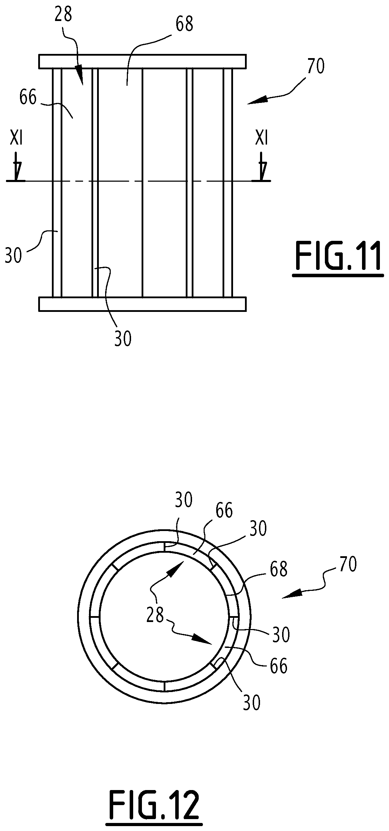

Selon un autre mode de réalisation correspondant aux figures 11 et 12, chaque élément de maintien 28 est également relié à l'élément de maintien 28 suivant par une lame de verre 68.

Dans ce cas, l'ensemble des lames de verre 66 et 68 forme un cylindre 70 en matériau transparent renforcé par les barres de maintien 30.

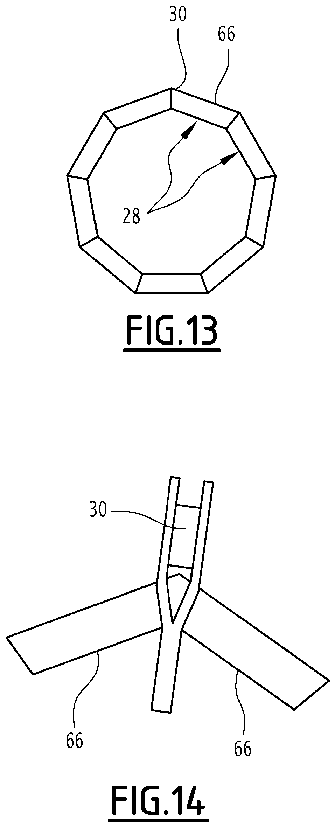

En variante, comme visible sur la figure 13, l'ensemble des lames de verre 66 et 68 forme un polygone 72. Dans un tel mode de réalisation, le faisceau optique est séparée en deux mais non vignetté comme cela apparaît sur la vue agrandie de la figure 14.

Dans chacun des modes de réalisation précédents, le système d'observation 10 panoramique permet une meilleure observation de l'environnement. Cela le rend utilisable pour tout type de plate-forme, que ce soit un véhicule non-blindé, un navire, un hélicoptère, un avion ou un bâtiment.

## Revendications

1. Système d'observation (10) panoramique pour plate-forme, le système d'observation (10) comportant :
- un support (14) présentant plusieurs positions distinctes,
- un capteur (18) présentant un système optique (24) présentant un champ au moins hémisphérique, le capteur (18) étant propre à capter des images d'une partie de l'environnement de la plate-forme, le capteur (18) étant solidaire du support (14) et une pupille (P) présentant une surface pupillaire étant définie pour le capteur (18),
- un calculateur (20) adapté pour traiter les images que le capteur (18) est propre à capter, et
- un dispositif de maintien (22) du capteur (18), le dispositif de maintien (22) comportant des éléments de maintien (28) positionnés dans le champ du système optique (24), les éléments de maintien (28) étant configurés pour que, dans toutes les positions du capteur (18), la surface apparente des éléments de maintien (28) sur la pupille (P) du capteur (18) soit strictement inférieure à la surface pupillaire, chaque élément de maintien (28) comportant deux barres de maintien (30) délimitant un espace intérieur (32) au moins en partie transparent.

2. Système selon la revendication 1, dans lequel les éléments de maintien (28) sont configurés pour que, dans toutes les positions du capteur (18), la surface apparente des éléments de maintien (28) sur la pupille (P) du capteur (18) soit inférieure ou égale à 50% de la surface pupillaire.

3. Système selon la revendication 2, dans lequel chaque élément de maintien (28) comporte des raidisseurs (34) reliant les deux barres de maintien (30).

4. Système selon la revendication 3, dans lequel l'espace intérieur (32) est une lame (66) à faces parallèles.

5. Système selon l'une quelconque des revendications 1 à 4, dans lequel le dispositif de maintien (22) comporte une structure mécanique (48) reliant les éléments de maintien (28).

6. Système selon l'une quelconque des revendications 1 à 5, dans lequel les éléments de maintien (28) sont propres à transporter de l'alimentation électrique et à transporter des données.

7. Système selon l'une quelconque des revendications 1 à 6, dans lequel le système comporte :
- au moins un capteur additionnel (46, 46A, 46B), par exemple choisi dans le groupe comprenant un radar, un goniomètre, un capteur audio, et un lidar, ledit au moins un capteur additionnel (46, 46A, 46B) présentant un champ au moins hémisphérique, le capteur additionnel (46, 46A, 46B) étant propre à capter des données d'une partie de l'environnement de la plate-forme, une pupille (P) présentant une surface pupillaire étant définie pour le capteur (46, 46A, 46B),
- au moins un dispositif de maintien (22) d'un capteur additionnel (46, 46A, 46B), le dispositif de maintien (22) comportant des éléments de maintien (28) positionnés dans le champ du capteur additionnel (46, 46A, 46B), les éléments de maintien (28) étant configurés pour que, dans toutes les positions du capteur additionnel (46, 46A, 46B), la surface apparente des éléments de maintien (28) sur la pupille (P) du capteur additionnel (46, 46A, 46B) soit strictement inférieure à la surface pupillaire,
chaque dispositif de maintien (22) étant agencé de manière à délimiter des logements (50) superposés, les logements (50) étant propres chacun à accueillir un capteur (18, 46, 46A, 46B) respectif.

8. Système selon la revendication 7, dans lequel chaque dispositif de maintien (22) comportant au moins une carte intégrée dans le dispositif de maintien (22), chaque carte intégrée étant une carte d'alimentation (58) et une carte de traitement.

9. Plate-forme, notamment une plate-forme mobile, comportant un système d'observation (10) panoramique selon l'une quelconque des revendications 1 à 8.

## Patentansprüche

1. - Panorama-Beobachtungssystem (10) für eine Plattform, wobei das Beobachtungssystem (10) umfasst:
- einen Träger (14) mit mehreren unterschiedlichen Positionen,
- einen Sensor (18) mit einem optischen System (24), das ein mindestens halbkugelförmiges Feld aufweist, wobei der Sensor (18) geeignet ist, Bilder eines Teils der Umgebung der Plattform zu erfassen, wobei der Sensor (18) fest mit dem Träger (14) verbunden ist und eine Pupille (P) mit einer Pupillenfläche für den Sensor (18) definiert ist,
- einen Rechner (20), der dazu geeignet ist, die Bilder zu verarbeiten, die der Sensor (18) aufnehmen kann, und
- eine Haltevorrichtung (22) des Sensors (18), wobei die Haltevorrichtung (22) Halteelemente (28) umfasst, die im Feld des optischen Systems (24) positioniert sind, wobei die Halteelemente (28) so konfiguriert sind, dass in allen Positionen des Sensors (18) die sichtbare Oberfläche der Halteelemente (28) auf der Pupille (P) des Sensors (18) strikt kleiner als die Pupillenfläche ist, wobei jedes Halteelement (28) zwei Haltestangen (30) umfasst, die einen zumindest teilweise transparenten Innenraum (32) begrenzen.

2. - System nach Anspruch 1, bei dem die Halteelemente (28) so konfiguriert sind, dass in allen Positionen des Sensors (18) die sichtbare Oberfläche der Halteelemente (28) auf der Pupille (P) des Sensors (18) kleiner oder gleich 50 % der Pupillenfläche ist.

3. - System nach Anspruch 2, bei dem jedes Halteelement (28) Versteifungen (34) aufweist, die die beiden Haltestangen (30) verbinden.

4. - System nach Anspruch 3, bei dem der Innenraum (32) eine Lamelle (66) mit parallelen Seiten ist.

5. - System nach einem der Ansprüche 1 bis 4, wobei die Haltevorrichtung (22) eine mechanische Struktur (48) aufweist, die die Halteelemente (28) verbindet.

6. - System nach einem der Ansprüche 1 bis 5, wobei die Halteelemente (28) geeignet sind, elektrische Energie zu transportieren und Daten zu transportieren.

7. - System nach einem der Ansprüche 1 bis 6, wobei das System Folgendes umfasst:
- mindestens einen zusätzlichen Sensor (46, 46A, 46B), beispielsweise ausgewählt aus der Gruppe bestehend aus einem Radar, einem Goniometer, einem Audiosensor und einem Lidar, wobei der mindestens eine zusätzliche Sensor (46, 46A, 46B) ein mindestens halbkugelförmiges Feld aufweist. Der zusätzliche Sensor (46, 46A, 46B) ist geeignet, Daten von einem Teil der Umgebung der Plattform zu erfassen, wobei eine Pupille (P) mit einer Pupillenfläche für den Sensor (46, 46A, 46B) definiert ist,
- mindestens eine Haltevorrichtung (22) eines zusätzlichen Sensors (46, 46A, 46B), wobei die Haltevorrichtung (22) Halteelemente (28) umfasst, die in dem Feld des zusätzlichen Sensors (46, 46A, 46B) positioniert sind, wobei die Halteelemente (28) so konfiguriert sind, dass in allen Positionen des zusätzlichen Sensors (46, 46A, 46B) die sichtbare Fläche der Halteelemente (28) auf der Pupille (P) des zusätzlichen Sensors (46, 46A, 46B) strikt kleiner als die Pupillenfläche ist,
jede Haltevorrichtung (22) so angeordnet ist, dass sie übereinanderliegende Aufnahmen (50) begrenzt, wobei die Aufnahmen (50) jeweils geeignet sind, einen entsprechenden Sensor (18, 46, 46A, 46B) aufzunehmen.

8. - System nach Anspruch 7, wobei jede Haltevorrichtung (22) mindestens eine in die Haltevorrichtung (22) integrierte Karte aufweist, wobei jede integrierte Karte eine Stromversorgungskarte (58) und eine Verarbeitungskarte ist.

9. - Plattform, insbesondere eine mobile Plattform, mit einem Panorama-Beobachtungssystem (10) nach einem der Ansprüche 1 bis 8.

## Claims

1. - A panoramic observation system (10) for a platform, the observation system (10) comprising:
- a support (14) with several distinct positions,
- a sensor (18) having an optical system (24) with a field that is at least hemispherical, the sensor (18) being able to capture images of part of the environment of the platform, the sensor (18) being integral with the support (14) and a pupil (P) having a pupillary surface being defined for the sensor (18),
- a computer (20) adapted to process the images that the sensor (18) is able to capture, and
- a device (22) for holding the sensor (18), the holding device (22) comprising holding elements (28) positioned in the field of the optical system (24), the holding elements (28) being configured so that, in all the positions of the sensor (18), the apparent surface of the holding elements (28) on the pupil (P) of the sensor (18) is strictly less than the pupillary surface, each holding element (28) comprising two holding bars (30) delimiting an at least partially transparent interior space (32).

2. - A system according to claim 1, in which the retaining elements (28) are configured so that, in all positions of the sensor (18), the apparent surface area of the retaining elements (28) on the pupil (P) of the sensor (18) is less than or equal to 50% of the pupillary surface area.

3. - A system according to claim 2, in which each holding element (28) comprises stiffeners (34) connecting the two holding bars (30).

4. - A system as claimed in claim 3, wherein the interior space (32) is a blade (66) with parallel faces.

5. - A system according to any one of claims 1 to 4, wherein the holding device (22) comprises a mechanical structure (48) connecting the holding elements (28).

6. - A system according to any one of claims 1 to 5, wherein the holding elements (28) are adapted to carry power and to carry data.

7. - A system according to any one of claims 1 to 6, wherein the system comprises:
- at least one additional sensor (46, 46A, 46B), for example selected from the group comprising a radar, a direction finder, an audio sensor and a lidar, said at least one additional sensor (46, 46A, 46B) having an at least hemispherical field of view field, the additional sensor (46, 46A, 46B) being able to capture data from part of the environment of the platform, a pupil (P) having a pupillary surface being defined for the sensor (46, 46A, 46B),
- at least one device (22) for holding an additional sensor (46, 46A, 46B), the holding device (22) comprising holding elements (28) positioned in the field of the additional sensor (46, 46A, 46B), the holding elements (28) being configured so that, in all the positions of the additional sensor (46, 46A, 46B), the apparent surface area of the holding elements (28) on the pupil (P) of the additional sensor (46, 46A, 46B) is strictly less than the pupillary surface area,
each holding device (22) being arranged so as to delimit superimposed housings (50), the housings (50) each being suitable for accommodating a respective sensor (18, 46, 46A, 46B).

8. - A system according to claim 7, wherein each holding device (22) comprises at least one card integrated into the holding device (22), each integrated card being a power card (58) and a processing card.

9. - A platform, in particular a mobile platform, comprising a panoramic observation system (10) according to any one of claims 1 to 8.
